# EUROPEAN PATENT APPLICATION

(11) **EP 4 787 154 A1**
(43) Date of publication of application: **05.08.2026**
(21) Application number: 25221304.6
(22) Date of filing: 05.12.2025
(51) Int. Cl.: G06F 8/65

(54) **PATCH PARTITION DELIVERY FOR LOCAL FUNCTION MANAGERS OF A COMPUTING DEVICE**

(30) Priority: 03.02.2025 US 202563753158 P; 04.02.2025 US 202519044983
(71) Applicant: GOOGLE LLC, Mountain View CA 94043 (US)
(72) Inventor: Prasad, Janardan, Mountain View, 94043 (US); Jayanti, Chandrakant, Mountain View, 94043 (US)
(74) Representative: Marks & Clerk GST

(57) **Abstract**

This document describes systems and techniques for delivering patch partitions to local function managers of a computing device. For example, a system includes a plurality of local function managers in a computing device, each of the local function managers is configured to identify an instance for execution of one or more patch partitions, each of the patch partitions including executable code to direct a local function and generate a patch request for the one or more patch partitions. A global function controller is configured to access a group of patch partitions including each of the one or more patch partitions for each of the plurality of local function managers and to respond to receipt of the patch request by delivering one or more requested patch partitions to the local function manager generating the patch request.

## Description

### CROSS-REFERENCE TO RELATED APPLICATION(S)

This application claims the benefit of U.S. Provisional Patent Application Serial No. 63/753,158 filed on February 3, 2025, the disclosure of which is incorporated by reference herein in its entirety.

### SUMMARY

This document describes systems and techniques for delivering patch partitions to local function managers of a computing device. In aspects, a global function manager and a plurality of local function managers are included in a multi-core processor, a system-on-chip (SoC) device, or another computer device and the global function manager, responsive to a request from one of the local function managers, delivers a patch partition including executable code directed to enabling the local function manager to perform a particular function in order to support operation of an associated subsystem served by the local function manager. In aspects, the global function manager is a global power manager and the local function managers include local power managers configured to supply power to the associated subsystems.

For example, a system includes a plurality of local function managers in a computing device, each of the local function managers is configured to identify an instance for execution of one or more patch partitions, each of the patch partitions including executable code to direct a local function and generate a patch request for the one or more patch partitions. A global function controller is configured to access a group of patch partitions including each of the one or more patch partitions for each of the plurality of local function managers and to respond to receipt of the patch request by delivering one or more requested patch partitions to the local function manager generating the patch request.

In some embodiments, each of the one or more patch partitions is extracted from a patch generated for one of the local function managers. Each of the one or more patch partitions may include a portion of the patch directed to a particular function performable by one of the local function managers.

In some embodiments, each of the plurality of local function managers includes a status register configured to set one or more status flags to indicate receipt of the one or more patch partitions delivered by the global function manager.

In some embodiments, each of the local function managers is associated with a subsystem of the computing device. Identifying the instance for execution of the one or more patch partitions may include identifying a function performable by one of the local function managers responsive to a demand for a particular type of service performable by the associated subsystem.

In some embodiments, the global function manager includes a global power manager and the plurality of local function managers includes a plurality of local power managers. The patch partitions may include executable code to support one or more of: initialization; dynamic voltage and frequency scaling (DVFS); automatic clock gating (ACG); automatic power gating (APG); and tear-down exit or power-down exit (TDX/PDX).

In some embodiments, each of the one or more patch partitions is received by the global function manager from system memory.

In some embodiments, each of the one or more patch partitions is received into system memory from storage.

This Summary is provided to introduce systems and techniques systems and techniques for delivering patch partitions to local function managers of a computing device, as further described below in the Detailed Description and Drawings. This Summary is not intended to identify essential features of the claimed subject matter, nor is it intended for use in determining the scope of the claimed subject matter.

### BRIEF DESCRIPTION OF THE DRAWINGS

The details of one or more aspects of systems and techniques for delivering patch partitions to local function managers of a computing device are described in this document with reference to the following Drawings. The same numbers are used throughout the drawings to reference like features and components.
FIG. 1 is a schematic diagram of a system including a global function manager configured to deliver patch partitions to local function managers;
FIG. 2 is a schematic diagram of a patch being divided into separate patch partitions for delivery to a local function manager;
FIGS. 3, 4A, and 4B are schematic diagrams of a data flow between a local function manager and a global function manager for the request and delivery of a patch partition;
FIG. 5 is a schematic diagram of a system including a global power manager interoperating with a number of local power managers in a computing device;
FIGS. 6A-6C are schematic diagrams of the system of FIG. 5 illustrating the delivery of patch partitions in response to activity of local subsystems; and
FIG. 7 is a flow diagram of an example method of the global power manager delivering requested patch partitions to a local power manager in the system of FIG. 5.

### DETAILED DESCRIPTION

### OVERVIEW

Many computing devices, such as multicore processors and SoC devices, including multiple subsystems configured or configurable to perform separate and/or independent functions. Because these subsystems operate independently, they may independently require access to different services, such as communications, data, storage, or other services and, thus, the subsystems may be supported by local function managers configured to provide those services to each of the subsystems.

For a particular example, in a computing device supporting multiple subsystems, to preserve power, it may be desirable to shut down subsystems or otherwise transition subsystems to a low-power state when not in use. To this end, each of the subsystems may be associated with a local function manager in the form of a local power manager. When the subsystem is invoked to perform desired functions, the local power manager may provide power to the subsystem.

Implementing and/or maintaining processors or SoC devices may require providing software patches to local function managers, controllers, subsystems, and other functional units of the devices. Software patches (patches) include executable code that updates or fixes operating code of a particular functional unit. The patches may be directed to providing workarounds or adapting for fabrication issues, implementing improvements, or other changes. In a complex system a patch may include a significant block of executable code. As a result, delivery of an entire patch - which may be one of a number of patches - may take an appreciable amount of time to deliver to the functional unit before that functional unit may be used. Also, if those functional units are shut down to save power when not in use, these patches may have to be delivered again the next time that the functional unit is engaged. As a result, delivery of these patches may result in undesirable latency before the functional unit may perform a desired function.

Part of the reason that patches may become large is that they include code directed to multiple separate functions. In order to reduce latency, patches may be divided into separately deliverable patch partitions in which each of the patch partitions includes code directed to a particular function. Then, when a particular functional unit only needs code for a particular function being performed, only the patch partition related to that particular function is delivered to the functional unit. As a result, by delivering only the patch partition needed by a functional unit for the particular function, latency resulting from delivering other parts of the patch that are not needed is avoided.

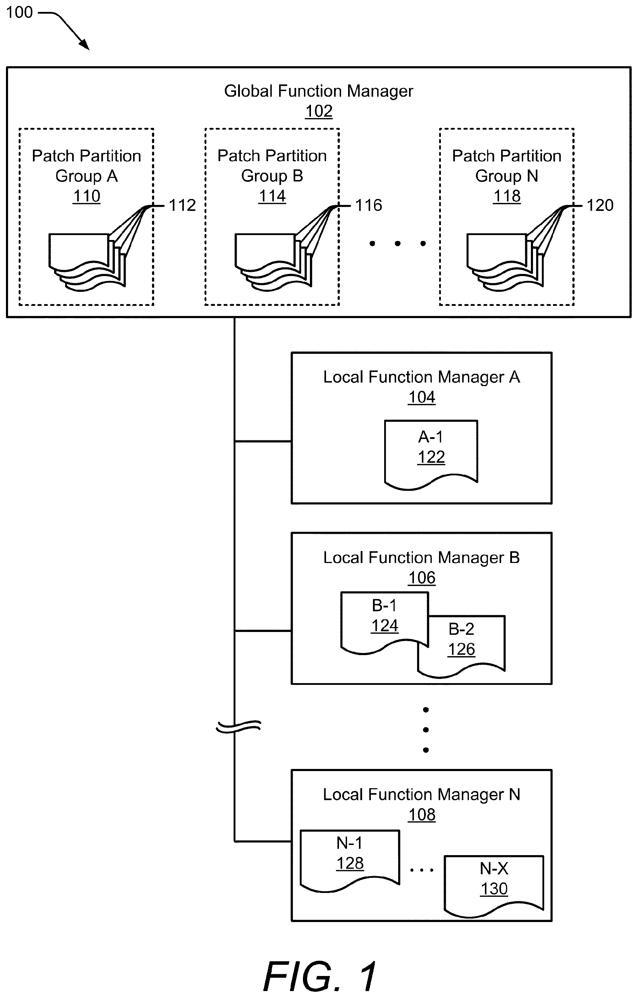

FIG. 1 shows a system 100 including a global function manager 102 and a plurality of local function managers including local function manager A 104, local function manager B 106, through local function manager N 108. To provide needed patch partitions to the local function managers 104, 106, and 108, the global function manager 102 maintains patch partitions deliverable to the local function managers 104, 106, and 108 on an as-requested basis. In aspects, the global function manager 102 maintains separate patch partition groups, such as patch partition group A 110 including patch partitions 112 for local function manager A 104, patch partition group B 114 including patch partitions 116 for local function manager B 106, and patch partition group N 118 including patch partitions 120 for local function manager N 108. However, it will be appreciated that the patch partitions 112, 116, and 118 also could be maintained in a single group for all of the local function managers 104, 106, and 108.

Depending on what functions are being performed by the local function managers 104, 106, and 108, the local function managers 104, 106, and 108 may need one or more but not all of the patch partitions 112, 116, and 118, respectively, that are available to them. Thus, for example, if local function manager A 104 is performing a service that only requires patch partition A-1 122, local function manager A 104 may request patch partition A-1 122. The global function manager 102 may then deliver only patch partition A-1 122 to local function manager A 104. At this time, local function manager A 104 can use the delivered patch partition A-1 122 and proceed with providing a requested service without waiting for the delivery of all patches created for local function manager A 104 as represented by the patch partitions 112 in patch partition group A 110.

At the same time, because the global function manager 102 need not deliver all of the patch represented by the patch partitions 112 in patch partition group A 110 to local function manager A 104, the global function manager 102 can deliver other patch partitions to other function managers. For example, after delivering patch partition A-1 122 to local function manager A 104, the global function manager 102 can deliver requested patch partitions B-1 124 and B-2 126 to local function manager B 106 and requested patch partitions N-1 128 through N-X 130 to local function manager N 108. As a result, not only can each of the local function managers 104, 106, and 108 proceed to provide services using the requested patch partitions as soon as they are received without waiting for currently unneeded parts of a patch to be delivered, but the local function managers 104, 106, and 108 also are not unnecessarily delayed in waiting for requested patch partitions from the global function manager 102 while the global function manager 102 delivers full patches to others of the local function managers 104, 106, and 108 that likewise may not need those the entirety of those patches.

### GENERATION AND DELIVERY OF PATCH PARTITIONS

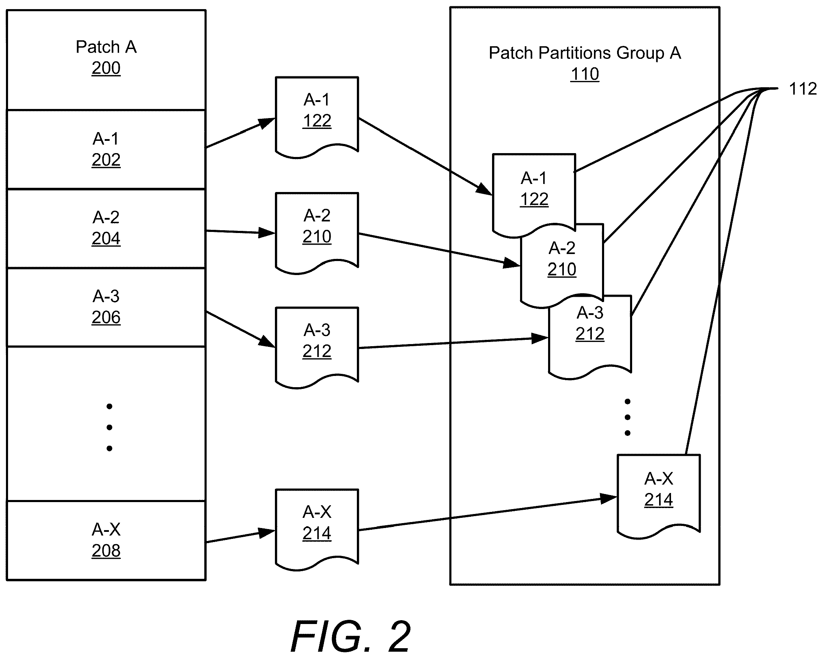

FIG. 2 shows how a patch, such as patch A 200 for local function manager 104 (see FIG. 1) may be divided into patch partitions to facilitate the delivery of patch partitions on an as needed basis. Patch A 200 includes sections of executable code A-1 202, A-2 204, A-3 206, through A-X 208. Each of the sections of executable code A-1 202, A-2 204, A-3 206, through A-X 208 may relate to separate functions performable by local function manager A 104. As a result, to perform functions to which section A-1 202 relates, local function manager A 104 may not need sections A-2 204, A-3 206, through A-X 208, just as in performing functions to which A-2 204 relates, local function manager A 104 may not need sections A-1 202, A-3 206, through A-X 208. Accordingly, the sections 200, 202, 204, through 208 of patch A 200 are divided into the patch partitions 112 (see FIG. 1) including patch partitions A-1 122, A-2 210, A-3 212, through A-X 214, each of which may be separately deliverable to local function manager A 104 on an as requested basis.

In aspects, the patch partitions A-1 122, A-2 210, A-3 212, through A-X 214 are collected in patch partition group A 110 from which the patch partitions A-1 122, A-2 210, A-3 212, through A-X 214 are accessible by the global function manager 102 (see FIG. 1) for delivery to the local function manager 104. In other aspects, the patch partitions A-1 122, A-2 210, A-3 212, through A-X 214 may be collected into a single group with other patch partitions (not shown in FIG. 2) from which the global function manager 102 may access on an as-requested basis.

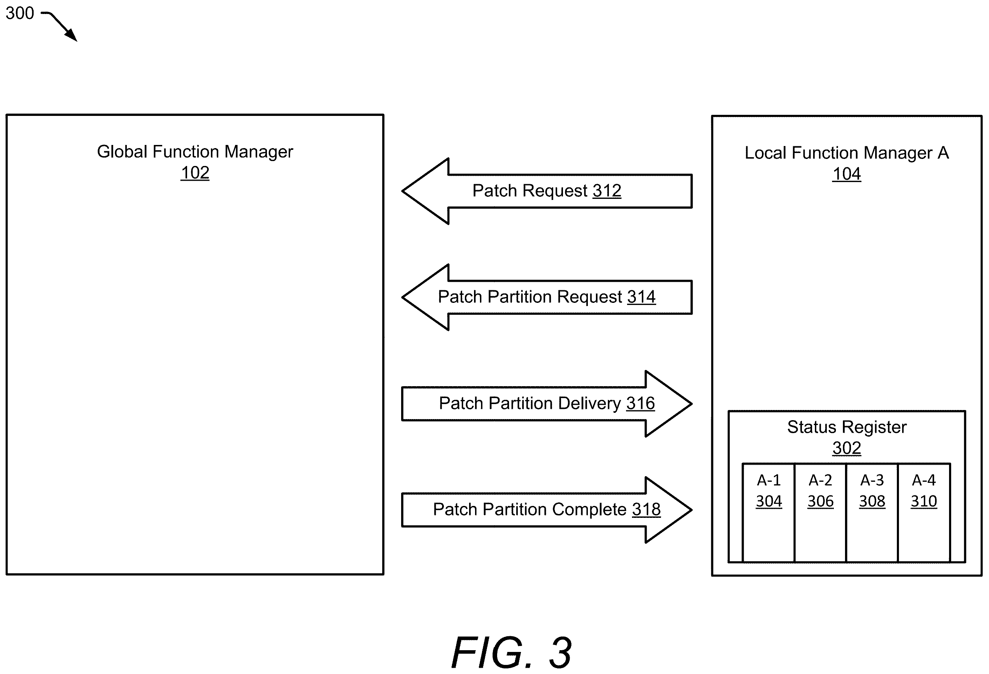

FIG. 3 shows a representative data flow 300 illustrating how the global function manager 102 delivers patch partitions to a local function manager, such as local function manager A 104, on an as-needed basis. In the example of FIG. 3, local function manager A 104 includes a status register 302 that is used by local function manager A 104 to track when a patch partition has been delivered. In aspects, the status register 302 may include flags 304, 306, 308, and 310 in the form of one or more bits each for each of the patch partitions that may be used which, continuing the example of FIG. 2, includes patch partitions A-1 122, A-2 210, A-3 212, through A-X 214. As a result, the status register 302 includes corresponding flags A-1 304, A-2 30-6, A-3 308, through A-N 310 to signal whether the corresponding patch partitions A-1 122, A-2 210, A-3 212, through A-X 214 have been received. When the flag A-1 304, A-2 30-6, A-3 308, and/or A-N 310 indicates that the corresponding, requested patch partition has been received, local function manager A 104 can perform the service for which the respective patch partition or partitions was requested without waiting for other patch partitions to be delivered.

The data flow 300 begins with local function manager A 104 asserting a patch request 312. As further described below, the patch request 312 may be asserted in response to a subsystem associated with local function manager A 104 being activated or requesting a service from local function manager A 104. As part of the patch request 312 or in addition to the patch request 314, local function manager A 104 asserts a patch partition request 314 identifying which patch partition is requested. In aspects, the patch partition request 314 identifies the function for which a patch partition is requested, such as by specifying a predetermined code or other descriptor from which the global function manager 102 can identify an appropriate patch partition, as further described below. In response to the patch request 312 and the patch partition request 314, the global function manager 102 identifies the patch partition that is responsive to the patch partition request 314 and performs patch partition delivery 316 to local function manager A 104. Once the global function manager 102 determines that patch partition delivery 316 is completed, the global function manager sends a patch partition complete signal 318. Upon receipt of the patch partition complete signal 318, local function manager A 104 sets the appropriate flag 304, 306, 308, or 310 in the status register 302 to indicate that the requested patch has been received. Upon the flag 304, 306, 308, or 310 being set, local function manager A 104 may proceed to execute code included in the received patch partition to perform the desired function.

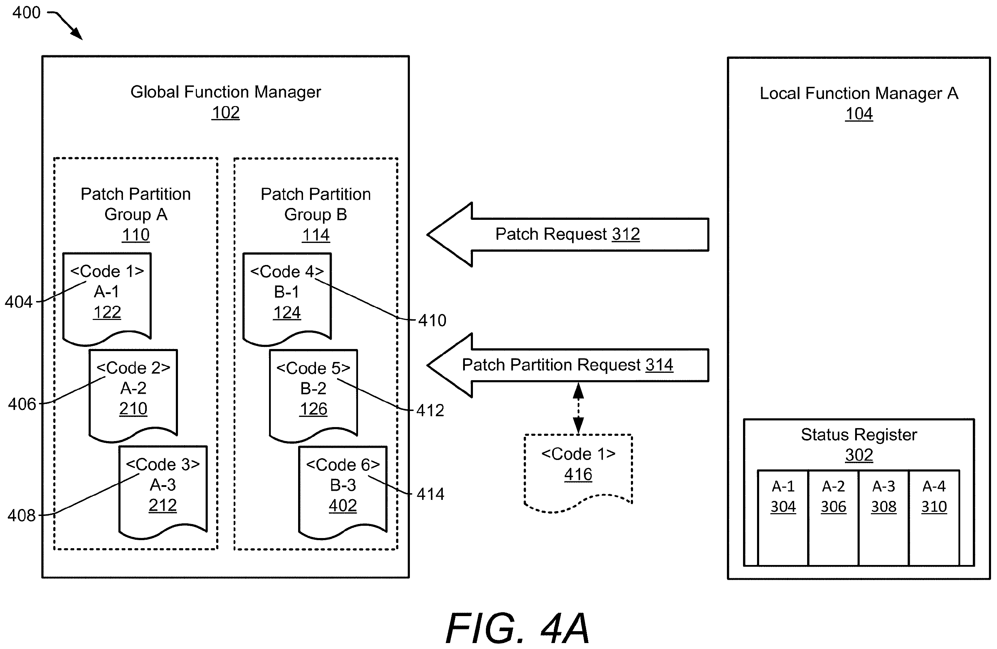

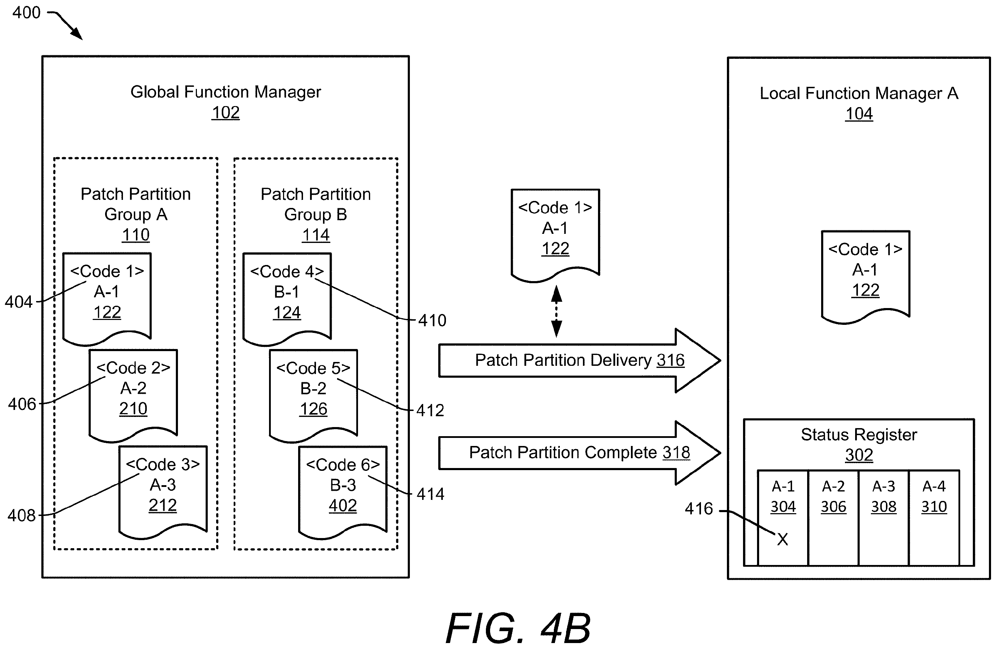

FIGS. 4A and 4B illustrate an example of how patch partition A-1 122 (see FIGS. 1 and 2) may be delivered to local function manager A 104 using the data flow 300 of FIG. 3. A system 400 includes global function manager 102 with access to patch partition group A 110 including patch partitions A-1 122, A-2 210, through A-3 212 and patch partition group B 114 including patch partitions B-1 124, B-2 126, through B-3 402. The global function manager 104 has access to an entirety of the partition groups 110 and 114, and potentially other partition groups (not shown in FIG. 4A) to serve potential needs of local function managers but, as previously described, only delivering patch partitions on an as-requested basis for the sake of efficiency.

In aspects, each of the patch partitions 122, 210, 212, 124, 126, and 402 may be stored under or associated with a code 404, 406, 408, 410, 412, and 414 or other indicator representative of the function with which each of the patch partitions 122, 210, 212, 124, 126, and 402 is associated. In this manner, local function manager A 104 and other local function managers need only be configured to identify a requested function or type of patch partition needed without having to identify the particular patch partition itself which may be updated after creation of the device including local function manager A 104. In the example of FIG. 4A, each of the codes 404, 406, 408, 410, 412, and 414 may be globally unique to the system including the global function manager 102 and local function manager A 104. Alternatively, the codes may be represent the same functions for each of a number of local function managers and the patch request 312 and/or the patch partition request may represent which of the local function managers generates the request to enable the global function manager 102 to identify the appropriate patch partition for the requesting local function manager.

Local function manager A 104 asserts patch request 312 to signal to the global function manager 102 of a need for a patch partition. Local function manager A 104 also sends a patch partition request 314 that, in aspects, identifies a type of patch partition needed by specifying a code or other descriptor for the type of patch needed. In the example of FIG. 4A, the patch partition request 314 includes <Code 1> 416 that was associated with a particular function when local function manager A 104 was created.

Referring to FIG. 4B, in response to the assertion of the patch request 312 and the patch partition request 314 specifying <Code 1> 416, the global function manager 102 identifies the patch partition corresponding to <Code 1> 416 which, in this case, is <Code 1> 404 associated with patch partition A-1 122. Having identified the relevant patch partition responsive to the patch partition request 314, the global function manager 102 performs the patch partition delivery 316 which, in this case, provides patch partition A-1 122 to local function manager A 104. At the conclusion of the patch participation delivery 316, the global function manager 102 sends the patch partition complete signal 318. Responsive to receiving the patch partition complete signal 318, the flag A-1 304 of the status register 302 is set to complete, as represented by the X 416 stored in the flag A-1 304. With the flag A-1 304 of the status register 302 set, the local function manager 104 is able to execute the patch partition 122 to perform the function that initiated the patch request 312 without waiting for all of the patch to be delivered.

### EXAMPLE OF A GLOBAL POWER MANAGER AND LOCAL POWER MANAGERS

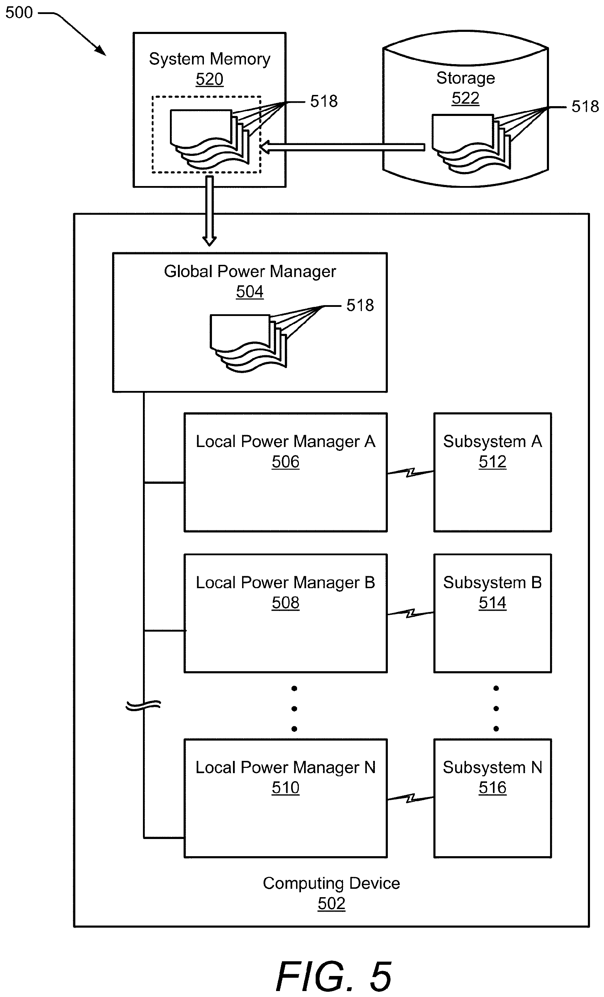

Although a system including a global function manager 102 and a number of local function managers 104 (see FIG. 1) may be used to control services for a plurality of different subsystems, an apt example is shown in FIG. 5 in which a system 500 includes a computing device 502 equipped with a global power manager 504 and a number of local power managers 506, 508, and 510 that control a supply of power to a group of associated subsystems 512, 514, and 516, respectively. The global power manager 504 stores a group of patch partitions 518 which may include patch partitions for all of the local power managers 506, 508, and 510 stored in a single group as shown in FIG. 5 or the patch partitions may be stored in separate groups as described with reference to FIGS. 1, 3, 4A, and 4B.

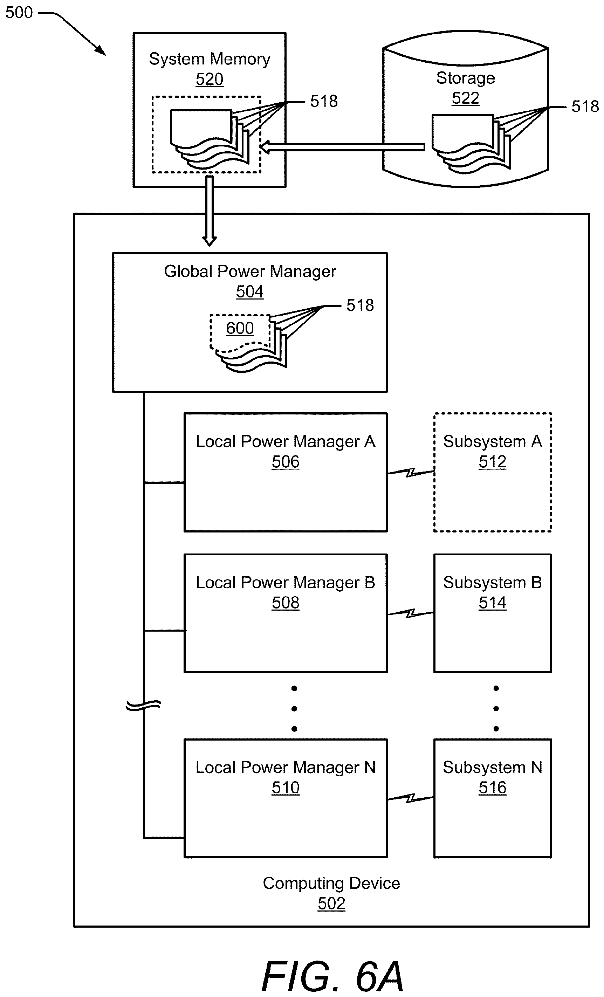

In aspects, the group of patch partitions 518 may be received by the global manager 504 from a system memory 520 of the system 500. The group of patch partitions 518 may be read into the system memory 520 from storage 522. The group of patch partitions 518 may be created to enhance operation of the local power managers 506, 508, and 510 or to adjust or correct for defects in fabrication of the computing device 502. The group of patch partitions 518 then may be saved in storage 522 from which the group of patch partitions 518 are read into the system memory 520 from which the group of patch partitions 518 are accessed by the global power manager 504 of the computing device 502. The group of patch partitions 518 may be copied into memory of the global power manager 504 for ready response to requests for patch partitions from one or more of the local power managers 506, 508, and/or 510. The local power managers 506, 508, and 510 may request one or more patch partitions from the global power manager 504 in response to activation or use of subsystems 512, 514, and 516 that are served by the local power managers 506, 508, and 510, respectively, as described below with reference to FIGS. 6A-6C.

Referring to FIG. 6A, subsystem A 512 associated with the local power manager A 506 becomes active or engages in a particular service (as indicated by a dotted line around subsystem A 512). Responsive to the activity of subsystem A 512, local power manager A 506 may identify an instance for execution of a patch partition relating to a particular service or function, such as dynamic voltage and frequency scaling (DVFS), automatic clock gating (ACG), automatic power gating (APG), tear-down exit or power-down exit (TDX/PDX) or another service or function. As a result, as described with reference to FIG. 3, local power manager A 506 may generate a patch request 312 and a patch partition request 314 (see FIG. 3) for the patch partition related to the service or function. In this example, local manager A 506 generates a patch partition request 312 for patch partition 600 (as highlighted by a dotted line around patch partition 600) of the group of patch partitions 518.

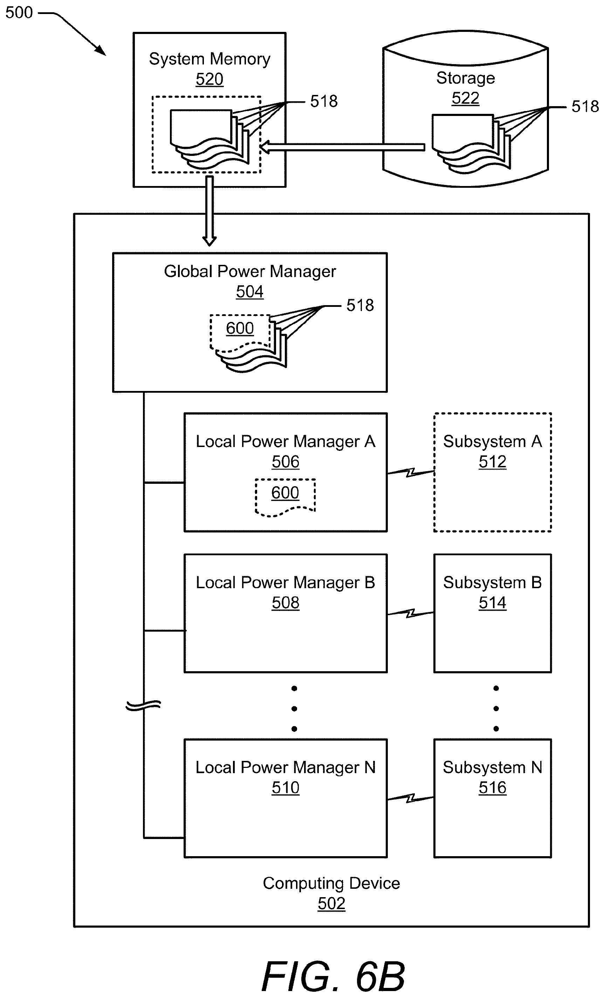

Referring to FIG. 6B, in response to the patch partition request 314, the global power manager 504 delivers the patch partition 600 to local power manager A 506. Once delivered, which may be confirmed by setting a flag in a status register as described with reference to FIGS. 3, 4A, and 4B (not shown in FIG. 6B), local power manager A 506 executes the code included in the patch partition 600 to provide the appropriate service responsive to the activity of subsystem A 512. The patch partition 600 may be executed without waiting for an entire patch or other patch partitions of the group of patch partitions 518 generated for local power manager A 506, thereby reducing latency in executing the patch partition 600 that is presently needed

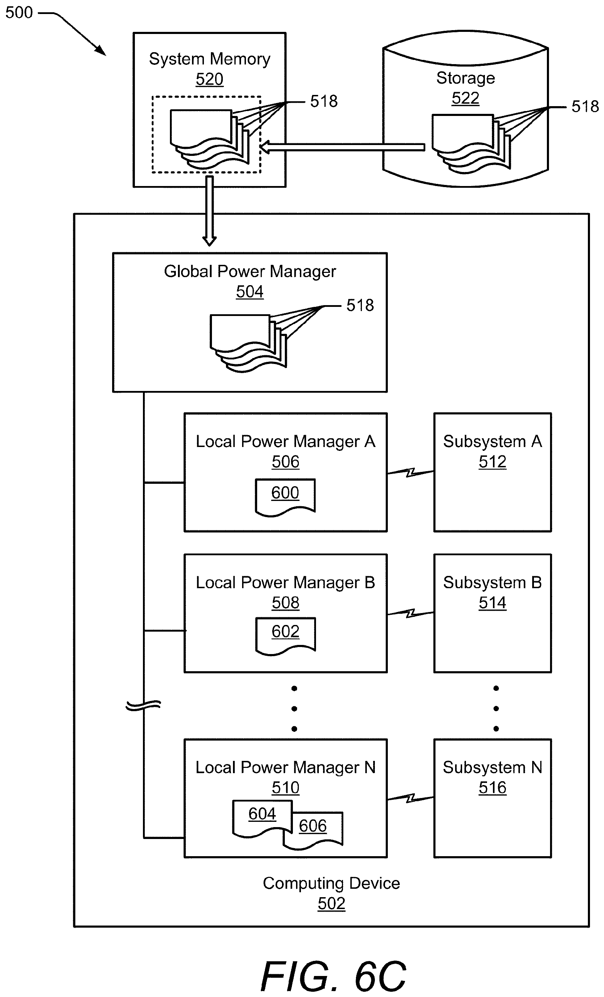

Referring to FIG. 6C, needed and requested patch partitions may be delivered by the global power manager 504 to other local power managers 508 and 510 when called for by actions of associated subsystems 514 and 516, respectively. For example, a patch partition 602 may be delivered by the global power manager 504 to local power manager B 508 in response to activity of subsystem B 514 and patch partitions 604 and 606 may be delivered by the global power manager 504 to local power manager N 510 in response to activity of subsystem 516. Again, each of the local power managers 506, 508, and 510 can execute patch partitions once received without waiting for all available patch partitions for that local power manager 506, 508, or 510 to be received and without waiting for delivery of full patches to others of the local power managers 506, 508, or 510 that might prevent the global power manager 504 from delivering requested patch partitions. In other words, latency is reduced for each local power manager in that it can request and execute just the patch partitions it needs without waiting for delivery of an entire patch including code for other functions not presently requested. Moreover, latency is reduced for the computing device 502 as a whole because other lower power managers requesting patch partitions need not wait for full patches to be delivered to other local power managers but only needs to wait for requested patch partitions to be delivered before being serviced by the global power manager 504.

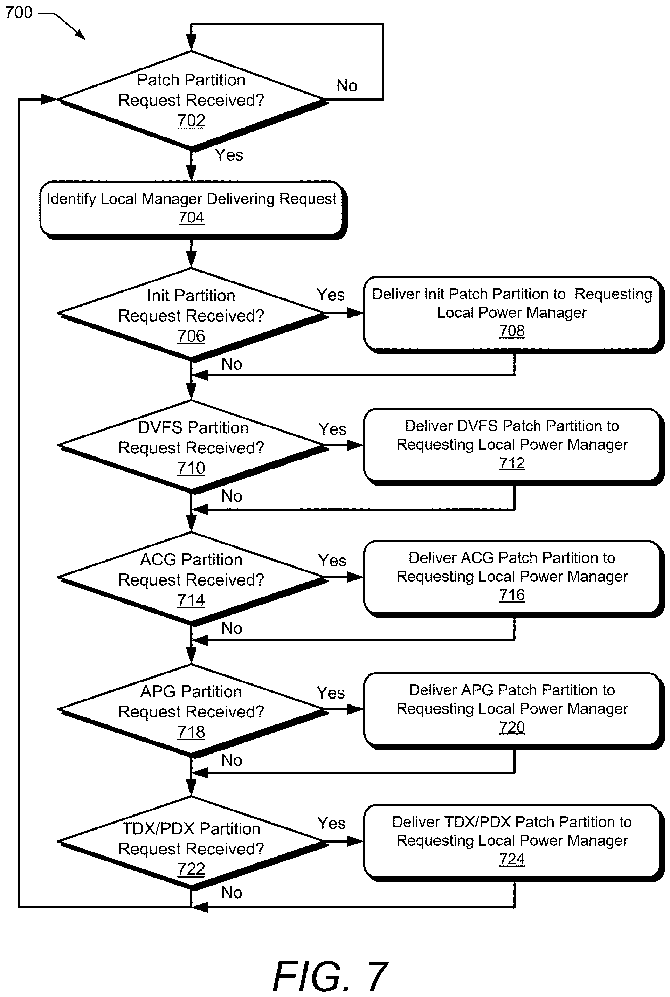

FIG. 7 shows a flow diagram of an example method 700 of a process that may be used by the global power manager 504 (FIGS. 5, 6A, 6B, and 6C) to respond to requests for patch partitions relating to power services. At a block 702, the global power manager 504 determines if a patch request 312 (see FIG. 3) has been received. If not, the global power manager 504 waits, continuing to determine if a patch partition request 314 is received. Upon determining at the block 702 that a patch request 312 has been received, at a block 704, the global power manager 504 identifies which of the local managers has sent the patch request 312. At blocks 706, 710, 714, 718, and 722, the global power manager 504 then examines the patch partition request 314 (see FIG. 3) to determine which type of patch partition is requested.

At the block 706, the global power manager 504 determines if the patch partition request 314 includes an initialization patch partition request. If so, at a block 708, the global power manager 504 delivers the initialization patch partition to the requesting local power manager. In the example method 700, the delivery of the initialization patch partition includes both the patch partition delivery 318 and the patch partition complete signal 320 (see FIG. 3) to confirm to set a corresponding status flag in the status register 302 (see FIG. 3) of the requesting local power manager to confirm that the delivery of the patch partition is complete. It should again be noted that, in the example method 700, the global power manager delivers the requested initialization patch partition to the requesting local manager for immediate execution by the requesting local power manager without delivering an entire patch or set of patch partitions so that the requesting local power manager need not wait to receive a complete patch or currently unneeded patch partitions. Similarly, the global power manager 504 can proceed to handle other requests without being tied up in delivering patch or patch partitions that are not requested. On the other hand, if it is determined at the block 706 that the patch partition request 314 did not include an initialization patch partition request, the example method 700 proceeds to a next query step at a block 710.

Similar to a process performed at the block 706, at the block 710, the global power manager 504 determines if the patch partition request 314 includes a dynamic voltage and frequency scaling (DVFS) patch partition request. If so, at a block 712, the global power manager 504 delivers the DVFS patch partition to the requesting local power manager. If it is determined at the block 710 that the patch partition request 314 did not include a DVFS patch partition request, the example method 700 proceeds to a next query step at a block 714. At the block 714, the global power manager 504 determines if the patch partition request 314 includes an automatic clock gating (ACG) patch partition request. If so, at a block 716, the global power manager 504 delivers the ACG patch partition to the requesting local power manager. If it is determined at the block 714 that the patch partition request 314 did not include an ACG patch partition request, the example method 700 proceeds to a next query step at a block 718. At the block 718, the global power manager 504 determines if the patch partition request 314 includes an automatic power gating (APG) patch partition request. If so, at a block 720, the global power manager 504 delivers the APG patch partition to the requesting local power manager. If it is determined at the block 718 that the patch partition request 314 did not include an APG patch partition request, the example method 700 proceeds to a next query step at a block 722. At the block 722, the global power manager 504 determines if the patch partition request 314 includes a tear-down exit or power-down exit (TDX/PDX) patch partition request. If so, at a block 724, the global power manager 504 delivers the TDX patch partition to the requesting local power manager. If it is determined at the block 722 that the patch partition request 314 did not include a TDX patch partition request, the example method 700 has evaluated the patch partition request 314 for all possible actions (in this example) and reverts to the block 702 to await receipt of a next patch request 312.

Again, while the example of FIGS. 5, 6A, 6B, 6C, and 7 concerns a global power manager 504 and local power managers 506, 508, and 510, the same concepts may be employed with a global function manager and local function managers configured to deliver communications or other services.

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of" a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying figures and terms discussed herein may be indicative of one or more items or terms, and thus reference may be made interchangeably to single or plural forms of the items and terms in this written description.

### CONCLUSION

Although implementations of systems and techniques for delivering patch partitions to local function managers of a computing device have been described in language specific to certain features and/or methods, the subject of the appended claims is not necessarily limited to the specific features or methods described. Rather, the specific features and methods are disclosed as example implementations of systems and techniques for delivering patch partitions to local function managers of a computing device.

## Claims

1. A system comprising:
a plurality of local function managers in a computing device, each of the local function managers configured to:
identify an instance for execution of one or more patch partitions, each of the patch partitions including executable code to direct a local function; and
assert a patch request for the one or more patch partitions; and
a global function manager configured to:
access a group of patch partitions including each of the one or more patch partitions for each of the plurality of local function managers; and
respond to receipt of the patch request by delivering one or more requested patch partitions to the local function manager generating the patch request.

2. The system of claim 1, wherein each of the one or more patch partitions is extracted from a patch generated for one of the local function managers.

3. The system of claim 2, wherein each of the one or more patch partitions includes a portion of the patch directed to a particular function performable by one of the local function managers.

4. The system of any one of claims 1 to 3, wherein each of the plurality of local function managers includes a status register configured to set one or more status flags to indicate receipt of the one or more patch partitions delivered by the global function manager.

5. The system of any one of claims 1 to 4, wherein each of the local function managers is associated with a subsystem of the computing device.

6. The system of claim 5, wherein identifying the instance for execution of the one or more patch partitions includes identifying a function performable by one of the local function managers responsive to a demand for a particular type of service performable by the associated subsystem.

7. The system of any one of claims 1 to 6, wherein the global function manager includes a global power manager and the plurality of local function managers includes a plurality of local power managers.

8. The system of claim 7, wherein the patch partitions include executable code to support one or more of:
initialization;
dynamic voltage and frequency scaling (DVFS);
automatic clock gating (ACG);
automatic power gating (APG); and
tear-down exit or power-down exit (TDX/PDX).

9. The system of any one of claims 1 to 8, wherein each of the one or more patch partitions is received by the global function manager from system memory.

10. The system of any one of claims 1 to 9, wherein each of the one or more patch partitions is received into system memory from storage.
